# EUROPÄISCHE PATENTSCHRIFT

(11) **EP 2 574 202 B1**
(45) Veröffentlichungstag und Bekanntmachung des Hinweises auf die Patenterteilung: **01.10.2014**
(21) Anmeldenummer: 12724548.8
(22) Anmeldetag: 13.03.2012
(51) Int. Cl.: F16B 5/06, F16B 37/04, F16B 5/12

(54) **BEFESTIGUNGSELEMENT**
FASTENING ELEMENT
ÉLÉMENT DE FIXATION

(30) Priorität: 12.05.2011 DE 102011101312
(43) Veröffentlichungstag der Anmeldung: 03.04.2013
(73) Patentinhaber: tm Leasing GmbH & Co. KG, 39218 Schönebeck (Elbe) (DE)
(72) Erfinder: Kersten, Mike, 39179 Barleben (DE)
(74) Vertreter: Fischer, Volker
(86) Internationale Anmeldenummer: PCT/DE2012/000260
(87) Internationale Veröffentlichungsnummer: WO 2012/152239

(56) Entgegenhaltungen:
- WO-A1-2010/006178
- BE-A- 425 172
- CH-A5- 657 678
- DE-A1- 2 153 140
- GB-A- 671 306
- US-A- 2 615 226

## Beschreibung

Die Erfindung betrifft ein Befestigungselement zur Befestigung von Blechen oder anderen Lasten an Flanschen oder sonstigen Vorsprüngen von Tragprofilen mittels eines an oder in das zu befestigende Blech oder die zu befestigende Last eingreifbaren oder an diesem/dieser angeordneten Befestigungsmittels. Ein bevorzugtes Anwendungsgebiet der Erfindung ist die Befestigung von Tränenblechen an Stahlträgern von Stahlbauunterkonstruktionen für den Aufbau von Podesten und Plattformen als Fußbodenkonstruktionen.

Aus der DE 10 2007 051 058 B4 ist eine Befestigungsklammer zur Befestigung von Tragprofilen oder Klemmprofilen an Tragprofilen mit in Längsrichtung verlaufender Funktionsnut bekannt. Die Befestigungsklammer besteht aus einem Grundkörper mit einem Brückenabschnitt und an zwei gegenüberliegenden Enden des Brückenabschnittes jeweils einen Stützabschnitt, wobei der Brückenabschnitt wenigstens zwei voneinander beabstandete Öffnungen zum Einführen eines Befestigungsmittels aufweist, wobei wenigstens eine der beiden Öffnungen im Brückenabschnitt als Schlitz ausgebildet ist, der sich bis zu einer Seitenkante des Brückenabschnittes erstreckt und wobei sich wenigstens zwei der Schlitze zueinander gegenüberliegender Seitenkanten des Brückenabschnittes erstrecken.
Die Befestigungsklammer kann in wenigstens zwei unterschiedlichen Positionen am Tragprofil befestigt werden, wobei zur Befestigung der Befestigungsklammer am Tragprofil ein Schraubenhaken durch eine der Öffnungen im Brückenabschnitt in die Funktionsnut des Tragprofiles eingreift und das Befestigungselement mit einer auf den Gewindeschaft des Schraubenhakens aufgeschraubten Rändelmutter gegen das Tragprofil verspannt wird. Die an den Enden des Brückenabschnittes anordneten Stützabschnitte dienen zum einen der Pressung eines mit dem Tragprofil zu verbindenden weiteren Tragprofiles oder eines Klemmprofiles gegen das Tragprofil und zum anderen zum Abstützen der Befestigungsklammer am Tragprofil. Die vorbeschriebene Befestigungsklammer hat ein sehr eingeschränktes Anwendungsgebiet und ist nicht zur Befestigung von Blechen an Stahlbauunterkonstruktionen geeignet.

Aus der US 2,130,546 A ist ein Befestigungsklipp für einen Fußbodenaufbau zur Befestigung einer Fußbodenplatte an einem horizontalen Flansch eines Unterzuges mittels einer durch die Fußbodenplatte und den Befestigungsklipp greifenden Schraube bekannt, wobei der Befestigungsklipp ein bogenförmig geschwungenes Mittelteil mit einer Durchgangsbohrung für die Schraube und an zwei gegenüberliegenden Enden des Mittelteiles jeweils eine bogenförmig geschwungene Lagesicherung aufweist. Zur Befestigung der Fußbodenplatte am Unterzug wird diese auf die Oberseite des horizontalen Flansches aufgelegt und eine Schraube durch eine neben dem Flansch in der Fußbodenplatte befindliche Bohrung geführt, wobei der Schraubenkopf auf der Oberseite der Fußbodenplatte aufliegt oder in diese eingesenkt ist. Der Befestigungsklipp wird auf den Gewindeschaft der Schraube so aufgesteckt, dass die Biegung seines bogenförmigen Mittelteiles zur Fußbodenplatte beabstandet ist und eine der bogenförmigen Lagesicherungen an der Unterseite der Fußbodenplatte und die gegenüberliegende bogenförmige Lagesicherung an der Unterseite des horizontalen Flansches des Unterzuges anliegt. Auf den durch die Durchgangsbohrung im Mittelteil des Befestigungsklipps ragenden Schraubenschaft wird eine Mutter aufgeschraubt und der Befestigungsklipp gegen die Unterseite der Fußbodenplatte und die Unterseite des horizontalen Flansches verspannt. Dabei wird unter elastischer Verformung des Befestigungsklipps die Fußbodenplatte gegen den horizontalen Flansch verspannt und gehalten. Nachteilig bei dieser Lösung ist, dass aufgrund der elastischen Verformung des Befestigungsklipps die erreichbare Anpresskraft begrenzt ist und der Klipp nur in begrenztem Umfang für unterschiedlich dicke Flansche verwendet werden kann. Hinzu kommt, dass der Klipp nicht gegen Verrutschen gegenüber dem horizontalen Flansch gesichert ist.

Ein weiteres Befestigungselement zur Befestigung von Holz- oder Holzfaserplatten an einem Metallprofil mit mindestens einem Flansch, an dem die Holz- oder Holzfaserplatte zur Anlage gebracht wird, ist aus der US 2,369,595 A bekannt. Das Befestigungselement besitzt einen U-förmigen Querschnitt, mit einem Boden und dran anschließenden parallel zueinander liegenden Schenkeln. In den Boden des Befestigungselementes ist eine für den Eingriff einer Gewindeschraube bestimmte Bohrung eingebracht. An der dem Boden des Befestigungselementes abgewandten Stirnseite einer der beiden Schenkel sind zwei spitz auslaufende Zacken ausgebildet. Zur Befestigung einer Holzfaserplatte an einem Metallprofil mit einem Flansch, an dem die Holzfaserplatte anliegt, wird das Befestigungselement derart angeordnet, dass die vom Boden des Befestigungselementes abgewandte Stirnseite des nicht mit Zacken versehenen Schenkels eben auf dem Flansch des Metallprofiles aufliegt, während die Zacken der Stirnseite des anderen Schenkels auf der Holzfaserplatte aufstehen. Mit einer durch die Holzfaserplatte greifenden Schraube, deren Gewinde in Eingriff mit der Bohrung im Boden des Befestigungselementes gebracht wird, wird das Befestigungselement gegen die Holzfaserplatte verspannt, wobei die Zacken in die Holzfaserplatte eindringen und das Befestigungselement gegen Verrutschen festlegen. Gleichzeitig wird die Holzfaserplatte gegen den Flansch gepresst. Das aus der US 2,369,595 A bekannte Befestigungselement zeichnet sich zwar durch einen einfachen Aufbau aus, es weist jedoch keine große Stabilität auf, so dass die realisierbaren Kräfte zum Anpressen der Holzfaserplatte gegen den Flansch des Metallprofiles begrenzt sind. Zur Befestigung einer Holzfaserplatte an einem Metallprofil sind daher nach der Beschreibung der Erfindung eine größere Anzahl an Befestigungselementen vorzusehen. Nachteilig ist weiterhin, dass das Befestigungselement nur zur Befestigung von Holz- oder Holzfaserplatten an einem Metallprofil geeignet ist.

Aus der DE 29512 701 U1 ist ein Haltepratzen zur Befestigung einer Räumleiste an einem Schneepflug bekannt. Der Haltepratzen besitzt zwei an gegenüberliegenden Seiten angeordnete unterschiedlich hoch ausgebildete Wülste und eine Durchgangsbohrung. Zur Befestigung der Räumleiste wird diese unter die weniger hoch ausgebildete Wulst geschoben und der Haltepratzen mittels einer durch die Durchgangsbohrung greifenden Klemmschraube gegen die Räumleiste gepresst. Die höher ausgebildete Wulst liegt dabei an einem Montageblech an und stützt so den Haltepratzen ab und wirkt gleichzeitig einem Verkanten des Haltepratzens entgegen. Der Haltepratzen ist massiv ausgebildet. Nachteilig ist, dass der Haltepratzen sehr speziell zur Befestigung von Räumleisten mit vorgegebenen Abmessungen in einem eng begrenzten Maßbereich ausgebildet ist und die zu befestigende Räumleiste sehr genau positioniert sein muss, um eine ausreichend gute Befestigung zu erreichen. Er besitz daher in einer Ausbildung ein sehr eingeschränktes Anwendungsfeld. Für unterschiedliche Anwendungen, d.h. unterschiedliche Dicken und Positionen eines zu befestigenden Bauteiles ist es daher notwendig, verschieden ausgebildete Haltepratzen vorzuhalten. Hinzu kommt die materialintensive massive Ausbildung des Haltepratzens.

Aus der DE 20 2005 017 802 U1 ist ein Befestigungselement zum Festlegen von Blechprofilrosten an einer Stahlbauunterkonstruktion bekannt, das von zwei an die Stärke des Obergurtes der Stahlbauunterkonstruktion, an dem der zu befestigende Blechprofilrost anliegt, angepassten Klammerbügeln gebildet wird, die mittels eines Verbindungselementes miteinander verbunden den Obergurt umgreifen. Die Anwendung dieses Befestigungselementes ist damit an die Abmaße des Obergurtes einer vorbestimmten Stahlbauunterkonstruktion gebunden.

Aus der Firmenschrift Verbindungs- und Klemmsysteme der Firma Lindapter GmbH, 45141 Essen, Deutschland, Seite 65 ist eine exzentrisch abgestufte Klemme zur Befestigung von Bodenplatten am Flansch eines Trägers einer Stahlbauunterkonstruktion bekannt. Die Klemme besteht aus Temperguss und weist um eine mit einer zentralen Gewindebohrung versehene Hülse umlaufende Stufen, ähnlich einer Wendeltreppe auf. Zur Befestigung einer Bodenplatte greift eine Schraube durch eine unmittelbar neben dem Flansch des Trägers in die Bodenplatte eingebrachte Bohrung. Die Schraube wird in die zentrale Gewindebohrung der Hülse eingeschraubt. Die Klemme wird durch Drehung um die zentrale Gewindebohrung so positioniert, dass eine Stufe der Klemme eben am Flansch anliegt. Durch Anziehen der Schraube wird die Bodenplatte mittels der Klemme gegen den Flansch gepresst. Nachteilig ist zum einen, dass die für die Befestigung in die Bodenplatte einzubringenden Bohrungen unmittelbar neben dem Flansch des Trägers, an dem die Bodenplatte befestigt werden soll, angeordnet sein müssen und dass die Verbindung Klemme-Flansch mit einer Schieflast beaufschlagt wird, was zum Abrutschen der Klemme vom Flansch bei schwingender Belastung führen kann.

Schließlich ist aus der gleichen Firmenschrift der Firma Lindapter GmbH, 45141 Essen, Deutschland, Seite 12 eine aus Temperguss bestehende Klemme zur Befestigung von Bauteilen am Flansch eines Trägers einer Stahlbauunterkonstruktion bekannt, Die Klemme besitzt an zwei gegenüberliegenden Seiten zum einen eine Klemmfläche und zum anderen einen Nocken. Vor der Klemmfläche erstreckt sich eine mit einer Zahnung versehenen Klemmennase. Zentral ist eine Durchgangsbohrung für den Durchgriff einer Klemmschraube angeordnet. Zur Befestigung eines Bauteiles an einem Flansch greift eine Schraube durch eine unmittelbar neben dem Flansch in das Bauteil eingebrachte Bohrung. Die Klemme ist so angeordnet, dass der Flansch unter der Klemmfläche positioniert ist. Durch Anziehen der Schraube wird die Klemmfläche der Klemme gegen den Flansch gepresst, während sich der Nocken an dem zu befestigenden Bauteil abstützt. Auch diese Lösung hat den Nachteil, dass die für die Befestigung in das Bauteil einzubringende Bohrung unmittelbar neben dem Flansch, an dem das Bauteil befestigt werden soll, angeordnet sein muss, dass somit das Bauteil in einer weitgehend exakt vorgeschriebenen Position zum Flansch angeordnet sein muss und eine Klemme in einer Ausbildung nur für die Befestigung an Flanschen mit einer Dicke in einem eng begrenzten Maßbereich geeignet ist. Zur Befestigung von Bauteilen an unterschiedlich dicken Flanschen wird die Klemme daher auch in vielen verschiedenen Ausbildungen mit unterschiedlichen Nockenhöhen angeboten.

Das Dokument WO 2010/006178 A zeigt den Oberbegriff von Anspruch 1.

Aufgabe der Erfindung ist die Bereitstellung eines Befestigungselementes zur Befestigung von Blechen oder anderen Lasten an Flanschen oder sonstigen Vorsprüngen von Tragprofilen, insbesondere von Tränenblechen an Stahlträgern von Stahbauunterkonstruktionen, mit dem die Nachteile des Standes der Technik vermieden werden. Das Befestigungselement soll bevorzugt auch für schwingende Belastungen geeignet sein, hinreichend universell, d.h. für unterschiedliche Flanschdicken und unterschiedliche Flanschbreiten oder unterschiedliche Dicken und Breiten anderer Vorsprünge geeignet sein, einen ausreichenden Toleranzausgleich zwischen der Lage der in das Blech oder die Last zur Befestigung einzubringenden Bohrung oder dem am Blech oder der Last angeordneten Befestigungsmittel und der Lage des Flansches oder des Vorsprunges in Bezug zum Blech oder der Last ermöglichen und hinreichend stabil, d.h. zur Aufbringung einer hinreichend großen Anpresskraft zwischen dem Flansch oder dem Vorsprung und dem Blech oder der Last, ausgebildet sein.

Die Lösung dieser Aufgabe wird durch ein die Merkmale des Anspruches 1 aufweisendes Befestigungselement erreicht. Die Ansprüche 2 bis 9 beschreiben vorteilhafte Weiterbildungen des erfindungsgemäßen Befestigungselementes.

Ein erfindungsgemäßes Befestigungselement weist ein im Querschnitt U-förmiges Brückenteil mit einem rechteckförmig ausgebildeten Boden und zwei an den Längsseiten des Bodens am Boden angeformten Schenkeln sowie zwei an den Stirnseiten des U-förmigen Brückenteiles entgegengesetzt zur Richtung der Schenkel weisende unterschiedlich hohe Abstützelemente auf, die beidseitig über die Breite des Bodens hinausragen und an den über die Breite des Bodens hinausragenden Bereichen in Richtung der Schenkel weisend Kontaktflächen besitzen. Die Schenkel ragen über die Länge des Bodens hinaus und besitzen an den über die Länge des Bodens hinausragenden Bereichen in Richtung der Abstützelemente weisende Kontaktflächen, die korrespondierend zu den an den Abstützelementen befindlichen Kontaktflächen ausgebildet sind. Im Boden des Brückenteils befindet sich eine Bohrung.

Das Verhältnis Länge zu Breite des rechteckförmigen Bodens ist bevorzugt größer 1,5, besonders bevorzugt größer 2.

Zweckmäßig sind an den vom Boden des Brückenteiles wegweisenden Stirnseiten der Abstützelemente beabstandet zueinander mindestens zwei noppenartige Materialaufwerfungen ausgebildet.

Bei einer bevorzugten Ausbildung des Befestigungselementes ist zwischen den Schenkeln des Brückenteiles mit ihrer Gewindebohrung fluchtend zur Bohrung im Boden des U-förmigen Brückenteiles eine Schraubenmutter angeordnet. Die Schraubenmutter wird gegen Verrutschen innerhalb des U-förmigen Brückenteiles sowie gegen Herausgleiten aus dem U-förmigen Brückenteil von zwei an den Schenkeln angeordneten umformbaren Laschen gehalten. Bevorzugt korrespondieren die Abmessungen der Schraubenmutter und die Öffnungsbreite des U-förmigen Brückenteiles, d.h. die Breite zwischen den Schenkeln des Brückenteiles, so miteinander, dass die Schraubenmutter zwischen den Schenkeln des Brückenteiles gegen Verdrehung gehalten wird. Ebenfalls bevorzugt wird die Schraubenmutter zwischen den Schenkeln des U-förmigen Brückenteiles und durch besagte an den Schenkeln angeordnete umformbare Laschen in ihrer Lage nicht fest fixiert, sondern lediglich mit Spiel gegen Verdrehen, Verrutschen und Herausrutschen aus dem U-förmigen Brückenteil gehalten.

Das Befestigungselement wird zweckmäßig aus einem Blechzuschnitt durch Abkantung gefertigt, wobei die Schenkel und die Abstützelemente gegenüber dem Boden des U-förmigen Brückenteiles jeweils um einen Winkel von ca. 90° abgekantet sind. Die Schenkel und die Abstützelemente weisen dabei in entgegengesetzte Richtungen. Bevorzugt weist das Blech eine Dicke zwischen 2,0 mm bis 4,0 mm auf und hat das Verhältnis Länge des Bodens (3) zu Höhe des Schenkels (4) einen Wert zwischen 0,2 bis 0,35. Ein so bemessenes Befestigungselement besitzt eine ausreichende Formstabilität für die Befestigung eines Bleches oder einer anderen Last an einem Flansch oder an einem Vorsprung eines Tragprofiles.

Die Erfindung sowie ihre besonderen Vorzüge sollen nachfolgend anhand eines Ausführungsbeispiels näher erläutert werden. Die zugehörigen Zeichnungen zeigen in
- Figur 1:: eine perspektivische Darstellung eines Befestigungselementes, in
- Figur 2:: eine perspektivische Darstellung eines Befestigungselementes mit einer zwischen den Schenkeln angeordneten Schraubenmutter, in den
- Figuren 2a, 2b und 2c:: drei Seitenansichten des Befestigungselementes gemäß Figur 2, in
- Figur 3:: eine perspektivische Darstellung eines weiteren Befestigungselementes, in
- Figur 4:: einen Blechzuschnitt zur Fertigung eines Befestigungselementes durch Abkantung, in den
- Figuren 5a, 5b und 5c:: mittels Befestigungselementen nach Figur 2 am Flansch eines Trägers befestigte Bleche, in den

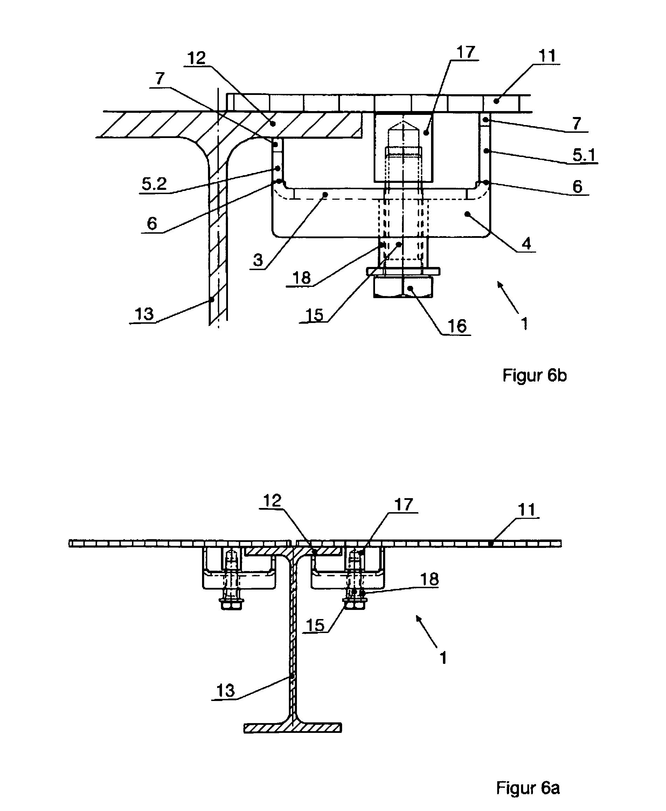

- Figuren 6a und 6b:: mittels Befestigungselementen nach Figur 1 am Flansch eines Trägers befestigte Bleche und in den
- Figuren 7a und 7b:: mittels Befestigungselementen nach Figur 1 am Flansch eines Trägers befestigte Bleche.

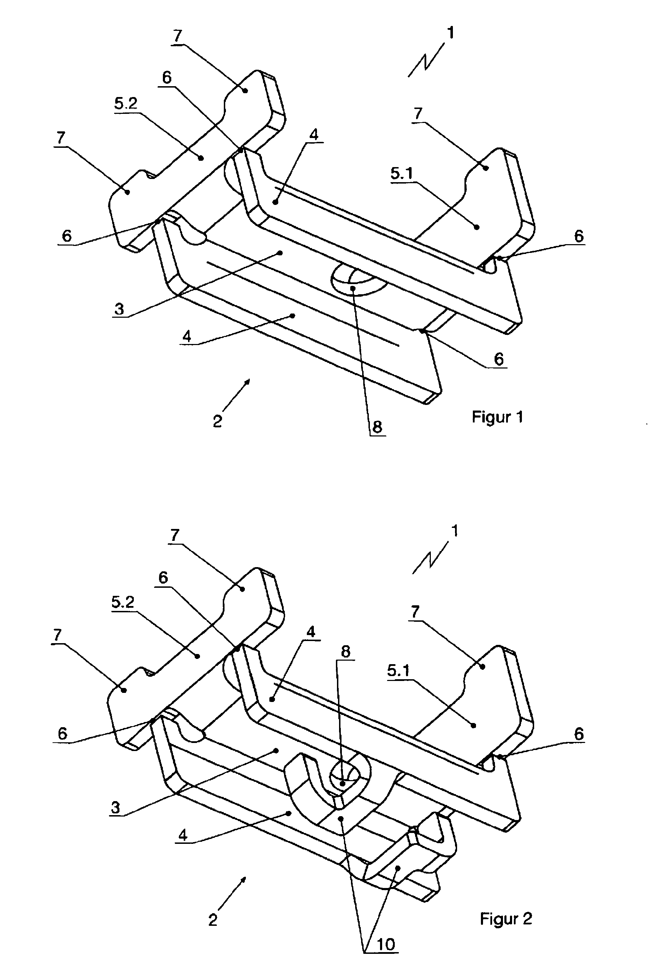

Figur 1 zeigt ein Befestigungselement 1 mit einem im Querschnitt U-förmigen Brückenteil 2. Das U-förmige Brückenteil 2 besitzt einen rechteckförmig ausgebildeten Boden 3 mit einem Verhältnis Länge zu Breite >2,5 und zwei an den Längsseiten des Bodens 3 am Boden 3 angeformte Schenkel 4. An den Stirnseiten des U-förmigen Brückenteiles 2 sind entgegengesetzt zur Richtung der Schenkel 4 weisende Abstützelemente 5.1 und 5.2 angeformt, die jeweils beidseitig über die Breite des Bodens 3 hinausragen und an den über die Breite des Bodens 3 hinausragenden Bereichen in Richtung der Schenkel 4 weisend Kontaktflächen 6 aufweisen, Die Abstützelemente 5.1 und 5.2 sind unterschiedlich hoch ausgebildet. Sie weisen einen Höhenunterschied von 2 mm bis 15 mm, bevorzugt von 5 mm bis 10 mm, auf. Die Schenkel 4 ragen beidseitig über die Länge des Bodens 3 hinaus und besitzen an den über die Länge des Bodens 3 hinausragenden Bereichen in Richtung der Abstützelemente 5.1, 5.2 weisende Kontaktflächen 6, die korrespondierend zu den an den Abstützelementen 5.1, 5.2 befindlichen Kontaktflächen 6 ausgebildet sind. An den seitlichen Enden der Stirnseiten der Abstützelemente 5.1 und 5.2 sind jeweils zwei noppenartige Materialaufwerfungen 7 ausgebildet. Im Boden 3 des Brückenteils 1 befindet sich in Richtung der Längsachse des Brückenteiles 1 zum höheren Abstützelement 5.1 hin versetzt eine Bohrung 8.

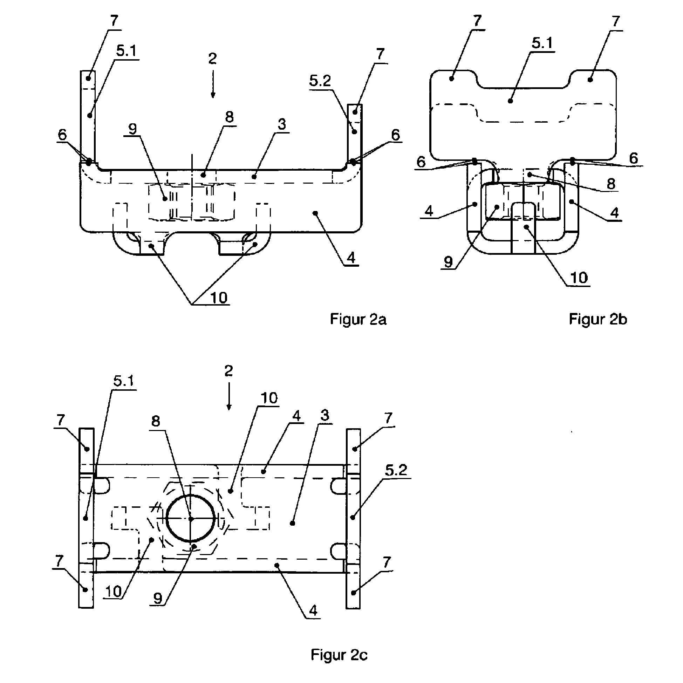

Figur 2 zeigt eine Weiterbildung des in Figur 1 dargestellten Befestigungselementes 1, bei welchem unterhalb der Bohrung 8 zwischen den Schenkeln 4 des Rückenteiles 2 eine in Figur 2 nicht dargestellte Schraubenmutter 9 angeordnet ist. Die Schraubenmutter 9 wird gegen Verrutschen in Längsrichtung des U-förmigen Brückenteiles 2 sowie gegen Herausgleiten aus dem U-förmigen Brückenteil 2 von zwei an den Schenkeln 4 angeordneten umformbaren Laschen 10 gehalten. Die äußeren Abmessungen der Schraubenmutter 9 und die Öffnungsbreite des U-förmigen Brückenteiles 2, d.h. die Breite zwischen den Schenkeln 4 des Brückenteiles 2, sind so aufeinander abgestimmt, dass die Schraubenmutter 9 zwischen den Schenkeln 4 des Brückenteiles 2 gegen Verdrehung gehalten wird, jedoch nicht fest eingespannt ist. Ebenso ist die Schraubenmutter 9 durch besagte an den Schenkeln 4 angeordnete umformbare Laschen 10 in ihrer Lage nicht fest fixiert, sondern sie wird lediglich mit Spiel gegen Verrutschen und Herausrutschen aus dem U-förmigen Brückenteil 2 gehalten und zwar derart, dass ihre Gewindebohrung durch Hin- und Herschieben der Schraubenmutter 9 fluchtend zur Bohrung 8 im Boden 3 des U-förmigen Brückenteiles 2 gebracht werden kann.

Die Figuren 2a bis 2c zeigen drei Seitenansichten (2a - Seitenansicht, 2b - Vorderansicht und 2c - Draufsicht) des vorbeschriebenen Befestigungselementes 1. Die umformbaren Laschen 10 sind bei dieser Ausbildung des Befestigungselementes 1 hakenförmig ausgebildet. Zwischen den Schenkeln 4 befindet sich eine Schraubenmutter 9, die durch die Schenkel gegen Verdrehen gehalten wird. Die umformbaren Laschen 10 sind so umgeformt, dass die Schraubenmutter 9 mit Spiel gegen Verrutschen innerhalb und Herausrutschen aus dem U-förmigen Brückenteil 2 gehalten wird.

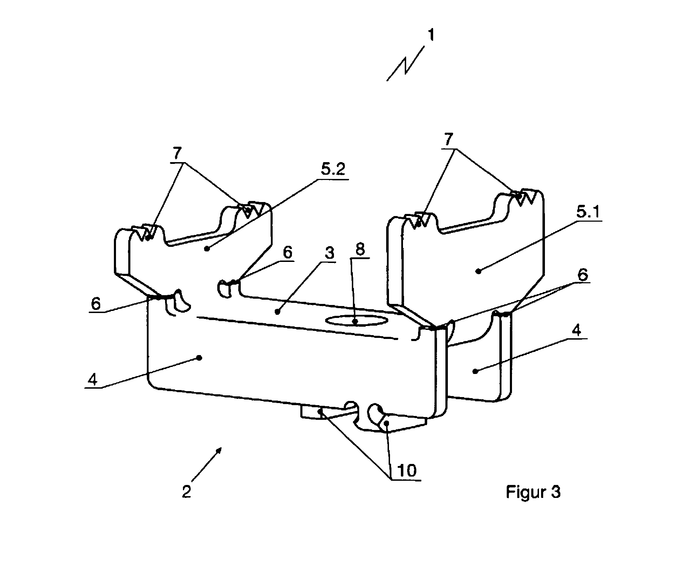

Die in Figur 3 dargestellte Ausbildung des Befestigungselementes 1 besitzt jeweils an den seitlichen Enden der Stirnseiten der Abstützelemente 5.1 und 5.2 Materialaufwerfungen 7 in Form einer Zahnung. Eine Zahnung an den Stirnseiten der Abstützelemente 5.1 und 5.2 ist besonders zur Abstützung auf weichen, verformbaren Materialien geeignet.

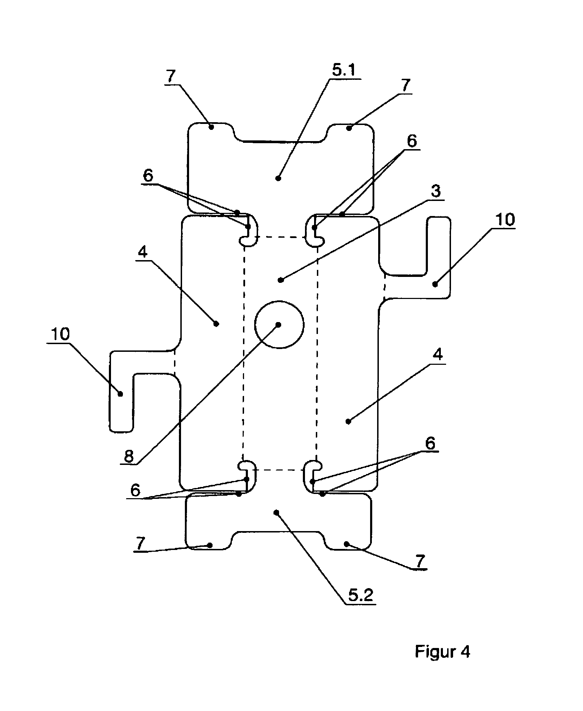

Zweckmäßig ist die Herstellung des Befestigungselementes 1 aus einem Blechzuschnitt eines 3 mm dicken Bleches durch Abkantung. Figur 4 zeigt einen entsprechenden Blechzuschnitt. Dazu werden zunächst entlang der gestrichelten Linien die Schenkel 4 jeweils um einen Winkel von 90° gegenüber dem Boden 3 abgekantet, so dass das U-förmige Brückenteil 2 entsteht, wobei dabei das Verhältnis der Länge des Bodens 3 zur Höhe eines Schenkels 4 einen Wert von 0,23 aufweist. Danach werden in entgegengesetzter Richtung zur Kantung der Schenkel 4 die Abstützelemente 5.1 und 5.2 ebenfalls um einen Winkel von 90° abgekantet. Nach dem Einlegen der Schraubenmutter 9 zwischen die Schenkel 4 in die Öffnung des U-förmigen Brückenteiles im Bereich der Bohrung 8 werden die Laschen 10 umgebogen, wodurch die Schraubenmutter 9 in der Öffnung des U-förmigen Brückenteiles 2 mit Spiel gehalten wird. Die Abkantung der Schenkel 4 sowie der Abstützelemente 5.1 und 5.2 um einen Winkel von 90° ist zweckmäßig, jedoch nicht zwingend notwendig. Es sind ebenso Abkantungen mit anderen Winkeln, beispielsweise zwischen 70° bis 100°, möglich.

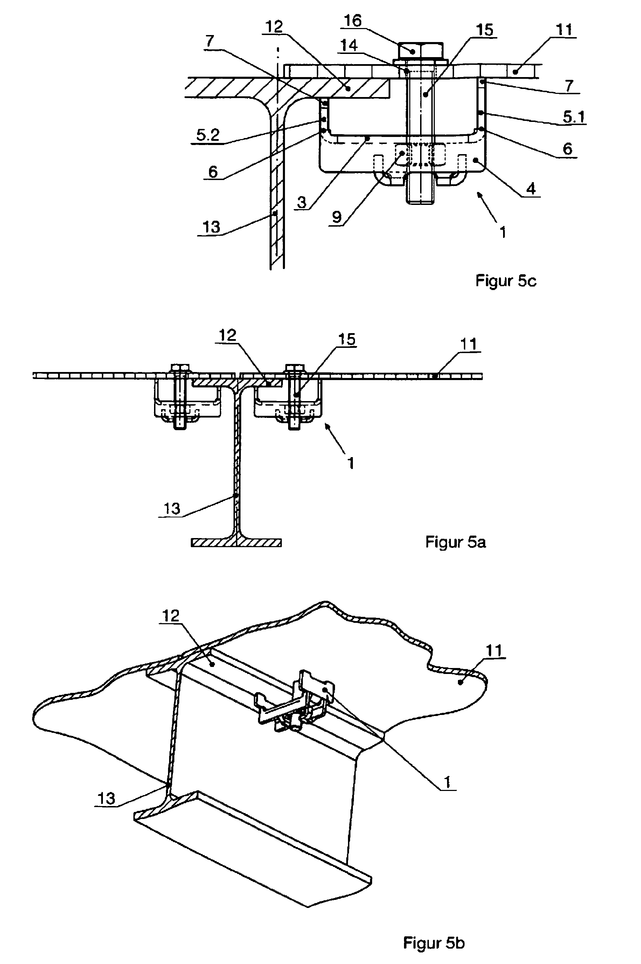

Die Figuren 5a, 5b und 5c veranschaulichen die Befestigung eines Bleches 11 am Flansch 12 eines Doppel-T-Trägers 13. In das zu befestigende Blech 11 wurde neben dem Flansch 12, an dem das Blech 11 befestigt werden soll, eine Bohrung 14 eingebracht. Durch diese Bohrung 14 ist eine Schraube 15 geführt. Der Kopf 16 der Schraube 15 liegt auf der Oberseite des Bleches 11 auf. Auf den Schraubenbolzen der Schraube 15 wird das Befestigungselement 1 so aufgesetzt, das das Gewinde des Schraubenbolzens in die Schraubenmutter 9 des Befestigungselementes 1 eingreift. Das Befestigungselement 1 wird so ausgerichtet, dass das höhere Abstützelement 5.1 zur Unterseite des Bleches 11 weist, während das kürzere Abstützelement 5.2 zum Flansch 12 gerichtet ist. Durch Anziehen der Schraube 15 wird das Befestigungselement 1 in Richtung Unterseite des Bleches 11 bzw. Flansch 12 bewegt. Die Materialaufwerfungen 7 an den Stirnseiten der Abstützelemente 5.1 und 5.2 kommen bei weiterem Anziehen der Schraube 15 zur Anlage an die Unterseite des Bleches 11 bzw. den Flansch 12. Dabei wird das Blech 11 gegen den Flansch 12 gepresst. Die auf die Abstützelemente 5.1, 5.2 wirkende Anpresskraft bewirkt eine Verformung des stirnseitigen Bereiches des Bodens 3, indem die Abstützelemente 5.1,5,2 mit dem Boden 3 verbunden sind und zwar derart, dass die Abstützelemente 5.1, 5.2 in Richtung der seitlich über die Länge des Bodens 3 hinausragenden Bereiche der Schenkel 4 verschoben werden und die korrespondierenden Kontaktflächen 6 der Schenkel 4 und der Abstützelemente 5.1. 5.2 aufeinander zur Anlage kommen, wodurch ein erheblicher Anteil der auf die Abstützelemente 5.1, 5.2 wirkenden Anpresskraft von den Schenkeln 4 aufgenommen wird. Die Abstützelemente 5.1,5.2 stützen sich auf den seitlich über die Länge des Bodens 3 hinausragenden Bereichen der Schenkel 4 ab, ohne dass es bei einem weiteren Anziehen der Schraube 15 und damit einer Erhöhung der Anpresskraft zu einer weiteren Verformung des Bodens 3 im Bereich, in dem die Abstützelemente 5.1,5.2 mit dem Boden 3 verbunden sind, kommt. Das Befestigungselement 1 kann damit erheblich höhere Kräfte aufnehmen bzw. erheblich höhere Anpresskräfte zwischen dem zu befestigenden Blech 11 und dem Flansch 12, an dem das Blech 11 befestigt werden soll, bewirken, als die Biegefestigkeit eines 3 mm dicken Bleches zulassen würde.
Die Materialaufwerfungen 7 bewirken einen weitgehend rutschsicheren Halt der Abstützelemente 5.1 und 5.2 sowohl an der Unterseite des Bleches 11 als auch am Flansch 12. Je nach Dicke des Flansches 12 kann das Brückenteil 2 des Befestigungselementes 1 entweder parallel oder geneigt zur Ebene des Bleches 11 ausgerichtet sein. Die mit Spiel im U-förmigen Brückenteil 2 angeordnete Schraubenmutter 9 ermöglicht auch bei einer gegenüber der Ebene des Bleches 11 geneigten Lage des U-förmigen Brückenteiles 2 eine sichere Anpressung des Bleches 11 gegen den Flansch 12. Untersuchungen haben ergeben, dass mindestens bis zu einer Neigung des U-förmigen Brückenteiles 2 von ±5° gegenüber der Ebene des Bleches 11 eine sichere Befestigung des Bleches 11 am Doppel-T-Träger 13 auch bei schwingender Belastung gewährleistet ist. Durch das Verhältnis Länge zu Breite des Bodens >1,5 oder wie im vorliegenden Beispiel >2,5 können auch erhebliche Verschiebungen der Bohrung 14 im Blech 11 gegenüber dem Flansch 12 oder der Lage des Bleches 11 gegenüber dem Flansch 12 ausgeglichen werden. Ein erfindungsgemäßes Befestigungselement 1 ermöglicht auf einfache Weise eine zum Ausgleich der vorgenannten Verschiebungen geeignete Ausbildung des Befestigungselementes 1, ohne dass dazu ein erheblich größerer Materialaufwand notwendig wird. Damit kann eine Ausbildung eines Befestigungselementes 1 zur Befestigung unterschiedlicher Bleche 11 an unterschiedlichen Flanschen 12 verwendet werden. Die vorgenannte Ausbildung betrifft insbesondere die Abmessungen des Befestigungselementes 1.

Die Fguren 6a und 6b veranschaulichen eine andere Variante zur Befestigung eines Bleches 11 am Flansch 12 eines Doppel-T-Trägers 13 mittels eines erfindungsgemäßen Befestigungselementes 1. Bei dieser Variante ist an der Unterseite des am Flansch 12 zu befestigendes Bleches 11 neben dem Flansch 12 eine Gewindehülse 17 angebracht. Das Befestigungselement 1 wird wie zu den Figuren 5a bis 5c beschrieben angeordnet und ausgerichtet. Durch die Bohrung 8 im Boden 3 des Brückenteiles 2 wird eine Schraube 15 in die Gewindehülse 17 eingeschraubt. Der Schraubenkopf 16 der Schraube 15 drückt über eine Hülse 18 gegen den Boden 3 des Befestigungselementes 1, wodurch beim Anziehen der Schraube 15 das Blech 11 vermittelt durch das Befestigungselement 1 gegen den Flansch 12 gepresst wird.

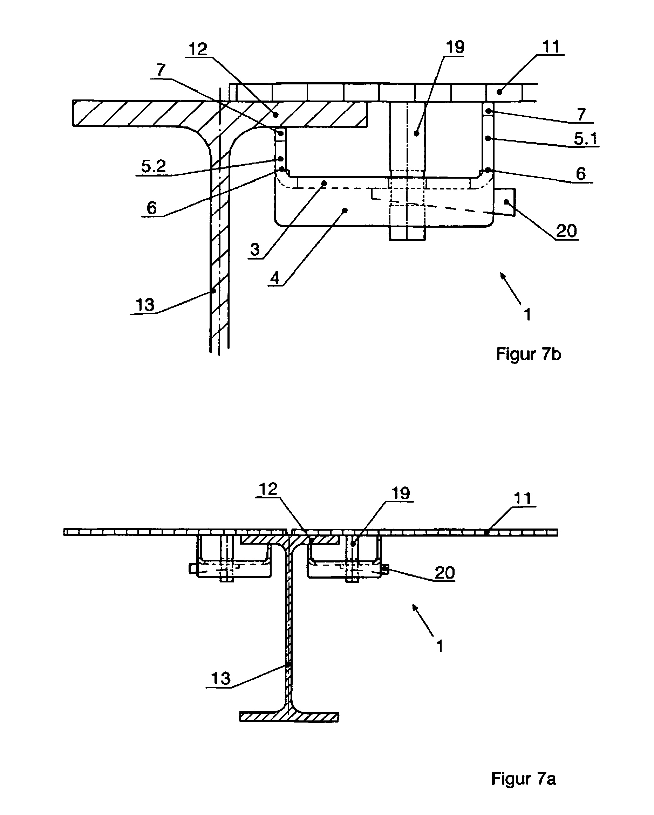

Eine weitere Variante zur Befestigung eines Bleches 11 am Flansch 12 eines Doppel-Trägers 13 mittels eines erfindungsgemäßen Befestigungselementes 1 ist in den Figuren 7a und 7b gezeigt. Bei dieser Variante ist an der Unterseite des am Flansch 12 zu befestigendes Bleches 11 neben dem Flansch 12 ein mit einem quer zu seiner Längsachse ausgerichteten Durchbruch versehener Bolzen 19 angeordnet. Das Befestigungselement wird so auf den Bolzen 19 aufgesetzt, dass dieser durch die Bohrung 7 im Boden 3 des Brückenteiles 2 greift. Es wird wie bereits beschrieben so ausgerichtet, dass das Abstützelement 5.1 mit der größeren Höhe zur Unterseite des Bleches 11 weist, während das Abstützelement 5.2 mit der kleineren Höhe zum Flansch 12 gerichtet ist. Zur Befestigung wird durch besagten Durchbruch im Bolzen 19 ein Keil 20 geschoben und soweit vorgetrieben, dass das Blech 11 vermittelt durch das Befestigungselement 1 gegen den Flansch 12 gepresst wird.

### Liste der Bezugszeichen

- 1: Befestigungselement
- 2: Brückenteil
- 3: Boden
- 4: Schenkel
- 5.1, 5.2: Abstützelemente
- 6: Kontaktflächen
- 7: Materialaufwerfung
- 8: Bohrung
- 9: Schraubenmutter
- 10: Lasche
- 11: Blech
- 12: Flansch
- 13: Doppel-T-Träger
- 14: Bohrung
- 15: Schraube
- 16: Schraubenkopf
- 17: Gewindehülse
- 18: Hülse
- 19: Bolzen
- 20: Keil

## Patentansprüche

1. Befestigungselement (1) zur Befestigung von Blechen (11) oder anderen Lasten an Flanschen (12) oder sonstigen Vorsprüngen von Tragprofilen (13) mittels eines an oder in das zu befestigende Blech (11) oder die zu befestigende Last eingreifbaren oder an diesem/dieser angeordneten Befestigungsmittels (15, 17, 19), wobei das Befestigungselement (1) ein im Querschnitt U-förmiges Brückenteil (2) mit einem Boden (3) und zwei seitlich daran angeformten Schenkeln (4) aufweist und im Boden (3) des Brückenteiles (2) eine Bohrung (8) für den Ein- oder Durchgriff des Befestigungsmittels (15, 17, 19) angeordnet ist, wobei
der Boden (3) rechteckförmig ausgebildet ist und die Schenkel (4) an den Längsseiten des Bodens (3) angeformt sind und an den Stirnseiten des Bodens (3) jeweils ein entgegengesetzt zur Richtung der Schenkel (4) des Brückenteiles (2) weisendes Abstützelement (5.1, 5.2) angeordnet ist, **dadurch gekennzeichnet, dass** das Abstützelement (5.1, 5.2) beidseitig über die Breite des Bodens (3) hinausragt und an den über die Breite des Bodens (3) hinausragenden Bereichen in Richtung der Schenkel (4) weisend Kontaktflächen (6) aufweist, dass die Schenkel (4) über die Länge des Bodens (3) hinausragen und an den über die Länge des Bodens (3) hinausragenden Bereichen in Richtung der Abstützelemente (5.1, 5.2) weisend Kontaktflächen (6) aufweisen, die korrespondierend zu den an den Abstützelementen (5.1,5.2) befindlichen Kontaktflächen (6) ausgebildet sind und dass die Höhe der Abstützelemente (5.1, 5.2) unterschiedlich ist.

2. Befestigungselement (1) nach Anspruch 1,
**dadurch gekennzeichnet,**
**dass** an den vom Boden (3) des Brückenteiles (2) wegweisenden Stirnseiten der Abstützelemente (5.1,5.2) beabstandet zueinander mindestens zwei noppenartige Materialaufwerfungen (7) ausgebildet sind.

3. Befestigungselement (1) nach Anspruch 1 oder 2,
**dadurch gekennzeichnet,**
**dass** das Verhältnis Länge zu Breite des rechteckförmigen Bodens (3) des Brückenteifes (2) größer 1,5, bevorzugt größer 2, ist.

4. Befestigungselement (1) nach Anspruch 1 bis 3,
**dadurch gekennzeichnet,**
**dass** zwischen den Schenkeln (4) des U-förmigen Brückenteiles (2) mit ihrer Gewindebohrung fluchtend zur Bohrung (8) im Boden (3) des Brückenteiles (2) eine Schraubenmutter (9) angeordnet ist.

5. Befestigungselement (1) nach Anspruch 4,
**dadurch gekennzeichnet,**
**dass** die Schraubenmutter (9) gegen Verdrehung durch die Schenkel (4) des U-förmigen Brückenteiles (2) und gegen Verrutschen entlang sowie Herausgleiten aus der Öffnung des U-förmigen Brückenteiles (2) durch zwei an den Schenkeln (4) angeordnete umformbare Laschen (10) gehalten wird.

6. Befestigungselement (1) nach Anspruch 5,
**dadurch gekennzeichnet,**
**dass** die Schraubenmutter (9) mit Spiel in der Öffnung des U-förmigen Brückenteiles (2) gehalten wird.

7. Befestigungselement (1) nach einem der Ansprüche 1 bis 6,
**dadurch gekennzeichnet,**
**dass** sich die Höhe der Abstützelemente (5.1, 5.2) um 2 mm bis 15 mm, bevorzugt um 5 mm bis 10 mm, unterscheidet.

8. Befestigungselement (1) nach einem der Ansprüche 1 bis 7,
**dadurch gekennzeichnet,**
**dass** das Befestigungselement (1) aus einem Blechzuschnitt durch Abkantung hergestellt ist.

9. Befestigungselement (1) nach Anspruch 8,
**dadurch gekennzeichnet,**
**dass** die Schenkel (4) des U-förmigen Brückenteiles (2) sowie die Abstützelemente (5.1, 5.2) gegenüber dem Boden (3) um einen Winkel von jeweils ca. 90° abgekantet sind, wobei die Schenkel (4) und die Abstützelemente (5.1, 5.2) in entgegengesetzte Richtungen weisen.

10. Befestigungselement (1) nach Anspruch 8 oder 9,
**dadurch gekennzeichnet,**
**dass** das Befestigungselement (1) aus einem Blech mit einer Dicke zwischen 2,0 mm bis 4,0 mm hergestellt ist und das Verhältnis Länge des Bodens (3) zu Höhe des Schenkels (4) einen Wert zwischen 0,2 bis 0,35 hat.

## Claims

1. Securing element (1) for securing metal sheets (11) or other loads to flanges (12) or other protrusions on supporting profiles (13) by means of a securing means (15, 17, 19) which is able to engage with or in the metal sheet (11) to be secured or the load to be secured or is arranged thereon, wherein the securing element (1) has a cross-sectionally U-shaped bridge part (2) with a base (3) and two limbs (4) integrally formed laterally thereon, and a bore (8) for the securing means (15, 17, 19) to engage in or through is arranged in the base (3) of the bridge part (2), wherein the base (3) is formed in a rectangular manner and the limbs (4) are integrally formed on the longitudinal sides of the base (3), and in each case one supporting element (5.1, 5.2) that is directed counter to the direction of the limbs (4) of the bridge part (2) is arranged on the end sides of the base (3), **characterized in that** the supporting element (5.1, 5.2) projects on both sides beyond the width of the base (3) and in the regions projecting beyond the width of the base (3) has contact surfaces (6) directed in the direction of the limbs (4), **in that** the limbs (4) project beyond the length of the base (3) and in the regions projecting beyond the length of the base (3) have contact surfaces (6) directed in the direction of the supporting elements (5.1, 5.2), said contact surfaces being formed so as to correspond to the contact surfaces (6) located on the supporting elements (5.1, 5.2), and **in that** the heights of the supporting elements (5.1, 5.2) are different.

2. Securing element (1) according to Claim 1, **characterized in that** at least two knob-like material protuberances (7) are formed in a manner spaced apart from one another on those end sides of the supporting elements (5.1, 5.2) that are directed away from the base (3) of the bridge part (2).

3. Securing element (1) according to Claim 1 or 2, **characterized in that** the length to width ratio of the rectangular base (3) of the bridge part (2) is greater than 1.5, preferably greater than 2.

4. Securing element (1) according to Claims 1 to 3, **characterized in that** a nut (9) is arranged between the limbs (4) of the U-shaped bridge part (2), the threaded bore of said nut being aligned with the bore (8) in the base (3) of the bridge part (2).

5. Securing element (1) according to Claim 4, **characterized in that** the nut (9) is held such that it cannot rotate by the limbs (4) of the U-shaped bridge part (2) and such that it cannot slip along and slide out of the opening in the U-shaped bridge part (2) by two deformable tabs (10) arranged on the limbs (4).

6. Securing element (1) according to Claim 5, **characterized in that** the nut (9) is held with play in the opening in the U-shaped bridge part (2).

7. Securing element (1) according to one of Claims 1 to 6, **characterized in that** the heights of the supporting elements (5.1, 5.2) differ by 2 mm to 15 mm, preferably by 5 mm to 10 mm.

8. Securing element (1) according to one of Claims 1 to 7, **characterized in that** the securing element (1) is produced from a sheet-metal blank by bending.

9. Securing element (1) according to Claim 8, **characterized in that** the limbs (4) of the U-shaped bridge part (2) and the supporting elements (5.1, 5.2) are bent by an angle of in each case about 90° with respect to the base (3), wherein the limbs (4) and the supporting elements (5.1, 5.2) are directed in opposite directions.

10. Securing element (1) according to Claim 8 or 9, **characterized in that** the securing element (1) is produced from a metal sheet having a thickness of between 2.0 mm and 4.0 mm and the ratio of the length of the base (3) to the height of the limb (4) has a value of between 0.2 and 0.35.

## Revendications

1. Elément de fixation (1) conçu pour fixer des tôles (11), ou d'autres charges, à des ailes (12) ou autres zones protubérantes de profilés de support (13), à l'aide d'un moyen de fixation (15, 17, 19) pouvant s'engager sur ou dans la tôle (11) à fixer, ou la charge à fixer, ou situé sur cette dernière, sachant que ledit élément de fixation (1) comporte une partie d'entretoisement (2) de section transversale en U, munie d'un fond (3) et de deux branches (4) faisant corps avec les côtés de celui-ci, et qu'un perçage (8), dévolu à la pénétration ou à la traversée dudit moyen de fixation (15, 17, 19), est pratiqué dans le fond (3) de ladite partie d'entretoisement (2), ledit fond (3) étant de réalisation rectangulaire, lesdites branches (4) faisant corps avec les côtés longitudinaux dudit fond (3) et un élément d'appui (5.1, 5.2), orienté en sens inverse de la direction desdites branches (4) de la partie d'entretoisement (2), étant respectivement disposé sur les côtés frontaux dudit fond (3), **caractérisé par le fait que** l'élément d'appui (5.1, 5.2) fait saillie, de part et d'autre, au-delà de la largeur du fond (3) et présente, dans les régions faisant saillie au-delà de la largeur dudit fond (3), des surfaces de contact (6) pointant dans la direction des branches (4) ; **par le fait que** lesdites branches (4) font saillie au-delà de la longueur dudit fond (3) et présentent, dans les régions faisant saillie au-delà de la longueur dudit fond (3), des surfaces de contact (6) qui pointent dans la direction des éléments d'appui (5.1, 5.2) et sont réalisées pour concorder avec les surfaces de contact (6) situées sur lesdits éléments d'appui (5.1, 5.2) ; et **par le fait que** la hauteur desdits éléments d'appui (5.1, 5.2) est différente.

2. Elément de fixation (1) selon la revendication 1,
**caractérisé par le fait**
**qu'**au moins deux profilages saillants (7), du type lobe, sont façonnés avec espacement mutuel sur les côté frontaux des éléments d'appui (5.1, 5.2) qui pointent à l'opposé du fond (3) de la partie d'entretoisement (2).

3. Elément de fixation (1) selon la revendication 1 ou 2,
**caractérisé par le fait**
**que** le rapport, entre la longueur et la largeur du fond rectangulaire (3) de la partie d'entretoisement (2), est supérieur à 1, 5 et, de préférence, supérieur à 2.

4. Elément de fixation (1) selon les revendications 1 à 3,
**caractérisé par le fait**
**qu'**un écrou (9), dont le trou taraudé est aligné avec le perçage (8) pratiqué dans le fond (3) de la partie d'entretoisement (2), est interposé entre les branches (4) de ladite partie d'entretoisement (2) configurée en U.

5. Elément de fixation (1) selon la revendication 4,
**caractérisé par le fait**
**que** l'écrou (9) est retenu à l'encontre d'une rotation par l'intermédiaire des branches (4) de la partie d'entretoisement (2) configurée en U et, par l'intermédiaire de deux pattes déformables (10) situées sur lesdites branches (4), à l'encontre d'un dérapage le long de l'ouverture de ladite partie d'entretoisement (2) configurée en U, ainsi que d'un ripage hors de ladite ouverture.

6. Elément de fixation (1) selon la revendication 5,
**caractérisé par le fait**
**que** l'écrou (9) est retenu avec jeu dans l'ouverture de la partie d'entretoisement (2) configurée en U.

7. Elément de fixation (1) selon l'une des revendications 1 à 6,
**caractérisé par le fait**
**que** la hauteur des éléments d'appui (5.1, 5.2) diffère de 2 mm à 15 mm, de préférence de 5 mm à 10 mm.

8. Elément de fixation (1) selon l'une des revendications 1 à 7,
**caractérisé par le fait**
**que** ledit élément de fixation (1) est produit par pliage à partir d'un flan en tôle prédécoupé.

9. Elément de fixation (1) selon la revendication 8,
**caractérisé par le fait**
**que** les branches (4) de la partie d'entretoisement (2) configurée en U, ainsi que les éléments d'appui (5.1, 5.2), sont coudés d'un angle respectif d'environ 90° par rapport au fond (3), lesdites branches (4) et lesdits éléments d'appui (5.1, 5.2) étant orientés dans des directions opposées.

10. Elément de fixation (1) selon la revendication 8 ou 9,
**caractérisé par le fait**
**que** ledit élément de fixation (1) est fabriqué en une tôle d'une épaisseur comprise entre 2,0 mm et 4,0 mm et le rapport, entre la longueur du fond (3) et la hauteur de la branche (4), présente une valeur comprise entre 0,2 et 0,35.
